# EUROPEAN PATENT SPECIFICATION

(11) **EP 1 948 345 B1**
(45) Date of publication and mention of the grant of the patent: **19.09.2012**
(21) Application number: 06844374.6
(22) Date of filing: 15.11.2006
(51) Int. Cl.: B01D 35/28, B01D 35/16

(54) **FUEL FILTER CARTRIDGE APPARATUS**
BRENNSTOFFFILTERKARTUSCHENVORRICHTUNG
APPAREIL A CARTOUCHE DE FILTRATION DE LIQUIDE

(30) Priority: 18.11.2005 US 283013
(43) Date of publication of application: 30.07.2008
(73) Proprietor: Baldwin Filters, Inc., Kearney, Nebraska 68848-6010 (US)
(72) Inventor: KRULL, Timothy L., Kearney, Nebraska 68845 (US); RIDGWAY, Russell D., Kearney, Nebraska 68847 (US)
(74) Representative: Van Malderen, Joëlle
(86) International application number: PCT/US2006/044384
(87) International publication number: WO 2007/061726

(56) References cited:
- US-A- 5 236 579
- US-A- 5 342 519
- US-A- 6 012 485
- US-A- 6 045 693

## Description

### FIELD OF THE INVENTION

This invention relates generally to devices for filtering and separating fluids. More particularly, the invention relates to fuel filters for removing foreign particles and separating water from fuel and fuel supply systems of a engine.

### BACKGROUND OF THE INVENTION

In order to ensure proper operation, and long life of an engine, it is known in the art to provide a fuel filter having an element that is capable of removing particulate matter and water from the fuel being supplied to the engine. Generally, such fuel filters include a disposable filter cartridge which is detachably mounted to a base, so that the filter cartridge can be replaced at periodic intervals. The base and fuel cartridge are cooperatively configured in such a manner that the base directs fluid into and out of the cartridge.

Filter cartridges, of the type used for filtering fuel being supplied to an engine, typically include a filter pack, also sometimes referred to as a filter element, mounted within a filter housing disposed about the filter pack, with a lower end of the housing defining a fluid sump extending substantially below the filter pack at the lower end of the housing. The mounting base and cartridge are configured in such a manner that fuel entering the filter is directed around the outside of the filter element, and such that the filtered and de-watered fuel is removed from the interior of the filter element. The filter element is constructed in such a manner that water coalesces on the outside of the filter element, and is directed into the sump of the housing by the force of gravity.

In order to allow periodic draining of the separated water from the sump, the filter housing also typically includes a drain fitting passing through the housing in the sump region, and attached to the housing. Such drain fittings are typically configured for threaded attachment thereto of a drain cock which allows the drain fitting to be selectively sealed or opened for draining water out of the housing of the filter cartridge.

In some filters, the drain fitting is further adapted for attachment thereto of a drain bowl providing an additional sump area for receiving water. Such drain bowls are sometimes fabricated of transparent or translucent materials allowing a visible indication from outside the filter of how much water is present within the drain bowl. The drain bowl also typically includes a drain bowl drain cock which allows selective draining of the water in the drain bowl, at periodic intervals. United States Patent Number 5,236,579 to Janik et al. discloses a fuel filter assembly with modular drain bowl, of the type generally described above.

Because the filter cartridge is a throw-away item, it is highly desirable that the cartridge be configured in a manner conducive to automated assembly at a low cost. The manner in which a drain fitting is attached to the housing in such filters can significantly impact the manufacturability and overall costs of the filter cartridge.

In some prior filter cartridges, including the cartridge disclosed in the Janik '579 patent, the drain fitting is press-fitted into a protrusion extending from a lower end of the cartridge housing. In order to ensure that an adequate connection is formed between the drain fitting and the housing, where the drain fitting is press-fitted into the housing, it is necessary that an outer peripheral portion of the drain fitting, and a mating inside surface of the housing, be accurately controlled to close tolerances. The necessity for maintaining such close tolerances on the drain fitting and housing tends to drive up manufacturing cost and difficulty.

Document US 6012485 discloses a spin-on type fuel filter having a drain fitting, said drain fitting is attached to the housing with a crimped joint.

Experience has also shown, that where a drain fitting is simply pressed into a housing, the drain fitting may loosen over time, and rotate with the drain cock, or other bolted attachments to the drain fitting, in such a manner that it is not possible to drain the contents from the sump of the filter. It is also noted that, should the drain fitting become loose, in prior filter cartridges having the drain fitting merely pressed into the housing, the drain fitting may be pulled out of, or pushed into the interior of, the housing during operation of a drain cock or other threaded fastener attaching a fluid bowl to the filter cartridge.

It is desirable, therefore, to provide an improved filter cartridge, and a method for manufacturing a filter cartridge, which overcome one or more of the problems described above. It is further desirable that such an improved filter cartridge be adaptable for use with existing filter bases, and allowing use of the filter cartridge with either a typical drain cock, and/or a fluid bowl.

### BRIEF SUMMARY OF THE INVENTION

The invention provides an improved fluid filter cartridge, and method for manufacturing such an improved fluid filter cartridge, by utilizing a crimped connection for attaching a drain fitting to a housing of the filter cartridge. Practice of the invention allows the drain fitting to be loosely fitted into the housing, prior to forming the crimped connection, thereby eliminating the additional complexity and cost associated with the press-fitted attachment of drain fitting to housings in prior filter cartridges, and providing a more secure joint to be formed between the drain fitting and housing than could be achieved in prior filter cartridges.

In one form of the invention, a filter cartridge includes a filter pack, and a housing disposed about the filter pack. The housing defines an upper and a lower end thereof, and a sump extending substantially below the filter pack at the lower end of the housing. The housing further includes a drain fitting passing through the housing in the sump and attached to the housing. The drain fitting has an outer periphery thereof which includes a crimping recess therein, and the housing includes a crimped portion thereof which is formed into the crimping recess of the drain fitting, to thereby form a crimped connection between the drain fitting and the housing.

The crimping recess also includes at least one anti-rotation feature, around which the crimped portion of the housing is formed for resisting rotation of the drain fitting with respect to the housing. Where the drain fitting defines an axis of passage through the housing, the crimping recess in the drain fitting is a radially outwardly opening groove. An anti-rotation element, in the form of a raised rib, extends outwardly from and substantially axially across the crimping recess.

The housing of a filter cartridge according to the invention, may include a tubular wall section thereof, disposed about the periphery of the drain fitting and including the crimped portion of the housing. A housing, according to the invention, may also have a cup-shaped extension thereof including the tubular wall, and having an axially facing end wall thereof joined to the tubular wall, with the end wall having a hole therein providing fluid communication with openings in the drain fitting. The drain fitting may be configured for operative attachment thereto of a drain cock, and the end wall of the cup-shaped extension may define a sealing surface thereof, adapted for cooperatively forming a sealable juncture with the drain cock, to thereby allow for selectively opening or closing-off fluid communication through the drain fitting.

A filter cartridge apparatus, according to the invention, may include either or both of, a filter pack disposed within the filter housing, and a sealing element operatively attached to the drain fitting, such as a drain cock and/or a drain bowl.

A method according to the invention, for constructing a fluid cartridge having a drain fitting attached to a housing with a crimped connection, may include configuring the housing to have a crimpable portion thereof for attachment to the drain fitting, and loosely inserting the drain fitting into the crimpable portion before forming the crimped connection. The method, according to the invention, includes configuring an outer peripheral surface of the drain fitting to have a crimping groove, and forming the crimpable portion of the housing into the crimping groove of the drain fitting to thereby form the crimped connection between the housing and the drain fitting. Further the method includes providing at least one anti-rotation feature in the form of a raised rib extending outwardly from and substantially axially across the crimping recess on the drain fitting for engagement by the housing as part of the crimped joint, to thereby resisting rotation of the drain fitting with respect to the housing.

A method, according to the invention, may further include configuring the housing of a fluid filter cartridge according to the invention to include a tubular wall section thereof, disposed about the periphery of the drain fitting and including the crimpable portion of the housing. A method may further include configuring the housing to provide a cup-shaped extension thereof, with the cup-shaped extension including the tubular wall and having an axially facing end wall of the cup-shaped extension joined to the tubular wall, with the end wall having a hole therein for providing fluid communication with the drain fitting. A method, according to the invention, may yet further include configuring the end wall of the cup-shaped extension to define a sealing surface thereof, for cooperatively forming a sealable juncture with a sealing element, to thereby selectively open or close-off fluid communication through the drain fitting.

A sealing element, in accordance with the invention, may take a variety of forms, including a resilient seal member, a drain cock, and/or a drain bowl.

Other aspects, objectives and advantages of the invention will be apparent from the following detailed description taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:

FIG. 1 is a vertical cross-section taken through a filter apparatus including an exemplary embodiment of a fluid filter cartridge, in accordance with the invention;

FIG. 2 is a partially cut-away perspective illustration of the drain fitting of the exemplary embodiment of the filter cartridge shown in FIG. 1;

FIG. 3 is a partially cut-away perspective illustration showing a crimped connection between the housing and the drain fitting of the exemplary embodiment of the filter cartridge shown in FIG. 1.

FIG. 4 is an enlarged partial cross-section of a sump area of the filter cartridge of the exemplary embodiment of the filter cartridge shown in FIG. 1, illustrating attachment of a drain cock to the drain fitting of the exemplary embodiment;

FIG. 5 is an enlarged partial cross-section of a sump area of the filter cartridge of the exemplary embodiment shown in FIG. 1, illustrating the manner in which a drain bowl is attached to the drain fitting of the exemplary embodiment of the filter cartridge;

While the invention will be described in connection with certain preferred embodiments, there is no intent to limit it to those embodiments. On the contrary, the intent is to cover all alternatives, modifications and equivalents zaps included within the spirit and scope of the invention as defined by the appended claims.

### DETAILED DESCRIPTION OF THE INVENTION

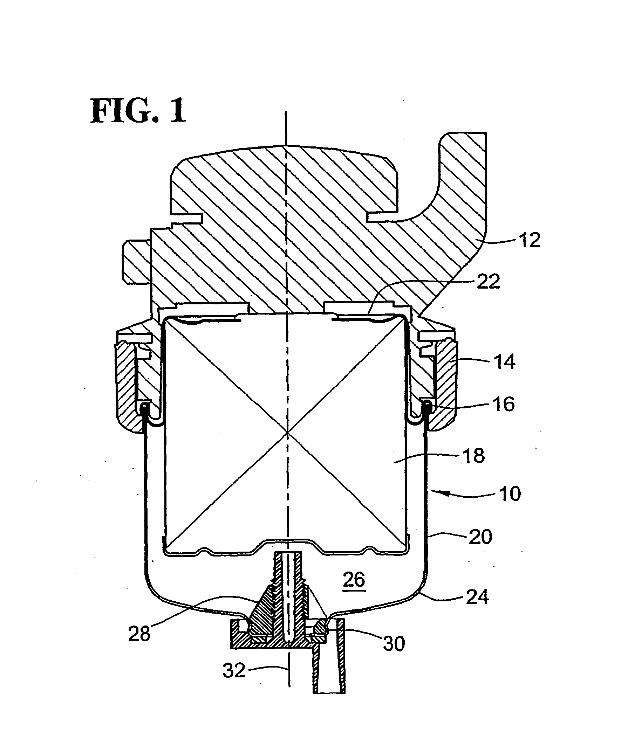

FIG. 1 shows an exemplary embodiment of the invention in the form of a filter cartridge apparatus 10, which is adapted for operative connection to a mounting base 12 by a retaining collar 14. In the exemplary embodiment, the filter cartridge 10 includes an integrally formed peripheral ridge 16, against which the retaining collar 14 bears, as the retaining collar 14 is screwed into place on the base 12, for forming an operative attachment between the filter cartridge 10 and the base 12. Those having skill in the art will recognize, however, that in other embodiments of a filter cartridge, according to the invention, the filter cartridge 10 may be attached to a mounting base in a variety of other ways.

The filter cartridge 10 includes a filter pack 18, and a housing 20 disposed about the filter pack 18. The housing 20 has an upper end 22 and a lower end 24 thereof, with the lower end 24 of the housing defining a sump 26 extending substantially below the filter pack 18 at the lower end 24 of the housing 20.

The housing 20 further includes a drain fitting 28 passing through the housing 20 in the sump 26, and attached to the housing 20 with a crimped connection 30, in a manner described in more detail below. The drain fitting 28 defines an axis of passage 32, through the housing 20. In the exemplary embodiment of the filter cartridge 10, the axis of passage 32 of the drain fitting 28 is substantially coincident with a central axis of the filter cartridge 10, but in other embodiments of the invention, the axis of passage need not necessarily be coincident with such a central axis of a filter cartridge according to the invention.

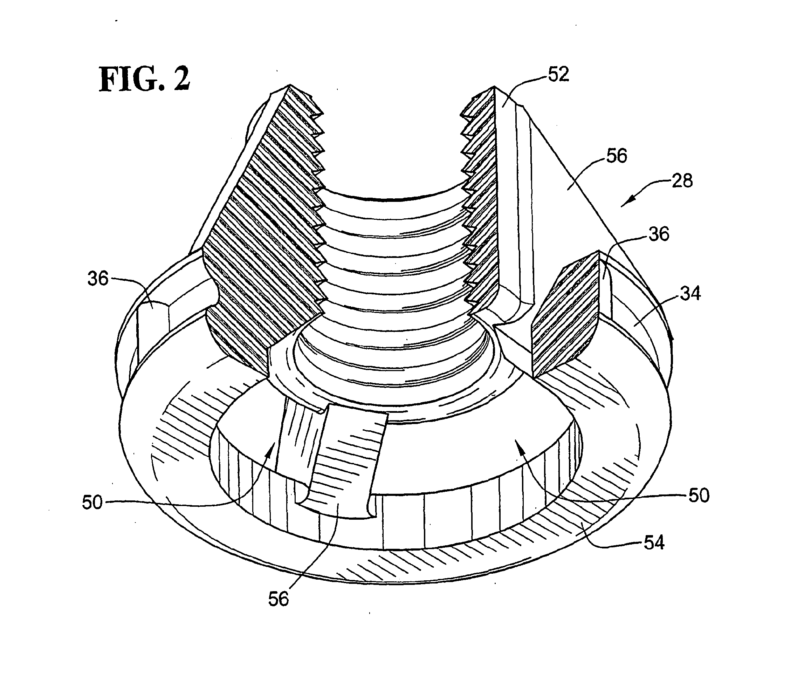

As shown in FIG. 2, the drain fitting 28, of the exemplary embodiment of the invention, has an outer periphery thereof including a crimping recess 34 therein, in the form of a radially outwardly opening groove. The crimping recess 34, of the exemplary embodiment, also includes a plurality of anti-rotation features, in the form of raised ribs 36 extending outwardly within and substantially axially across the crimping recess 34.

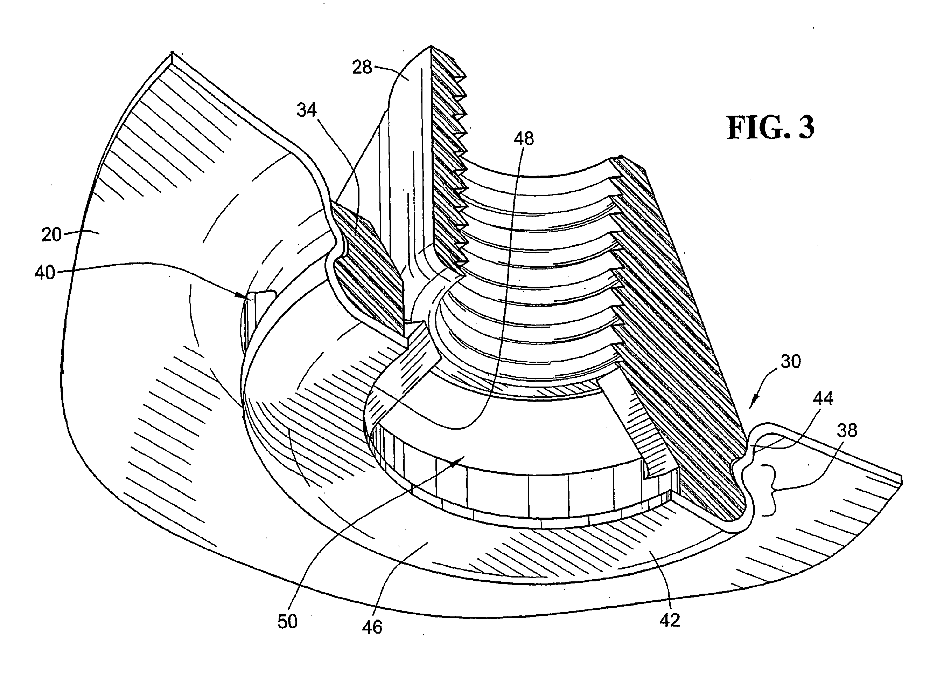

As shown in FIG. 3, the housing 20 includes a crimped portion 38 thereof, which is formed into the crimping recess 34, of the drain fitting 28, to thereby form the crimped connection 30 between the drain fitting 28 and the housing 20. As shown at 40, in FIG. 3, the crimped portion 38 of the housing 20 is also formed about the raised ribs 36 of the drain fitting 28 for restraining the drain fitting 28 against rotation with respect to the housing 20.

As further shown in FIG. 3, the housing 20, of the exemplary embodiment, includes a cup-shaped extension 42 including a tubular wall 44 and an axially facing end wall 46 thereof joined to the tubular wall 44 of the cup-shaped extension 42. The tubular wall section 44, of the cup-shaped extension 42, is disposed about the periphery of the drain fitting 28, and includes the crimped portion 38 of the housing 20. The end wall 46, of the cup-shaped extension 42, includes a hole 48 which is aligned with the drain fitting 28 and provides fluid communication with openings 50 extending through the drain fitting 28, for draining fluid from the interior of the filter cartridge 10. It will be appreciated that the cup-shaped extension 42 serves as a self-fixturing feature to properly position the drain fitting 28 axially and radially, with respect to the crimpable portion 38 of the housing 20, to thereby streamline construction and reduce cost.

As shown in FIG. 2, the drain fitting 28, of the exemplary embodiment includes a central female-threaded hub 52, joined to an outer rim 54 by a plurality of struts 56, with open spaces between the hub 52, outer rim 54, and struts 56 forming the openings 50 for passage of fluid through the drain fitting 28. It will be appreciated, however, that in alternate embodiments of the invention, a drain fitting may have a configuration differing substantially from the configuration of the drain fitting 28 of the exemplary embodiment described herein.

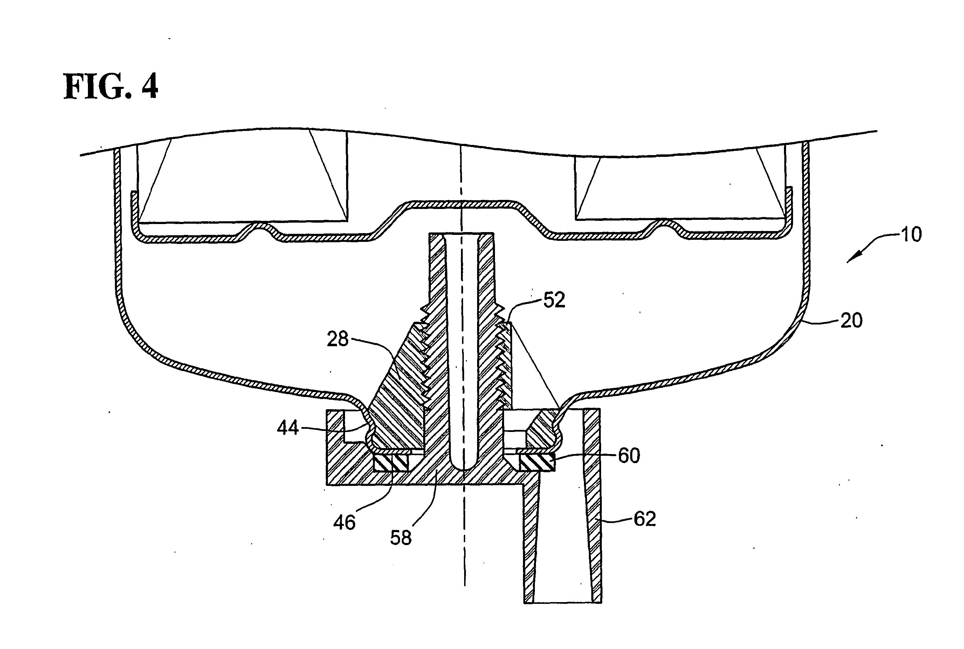

As shown in FIG. 4, by virtue of the configuration of the end wall 46 of the tubular wall portion 44 of the housing 20, of the exemplary embodiment of the filter cartridge 10, a resilient sealing member 60 of a sealing element, such as the drain cock 62 shown in FIG. 4, may cooperatively form a sealable juncture with the sealing element 62, to thereby allow for selectively opening or closing-off fluid communication through the drain fitting 28.

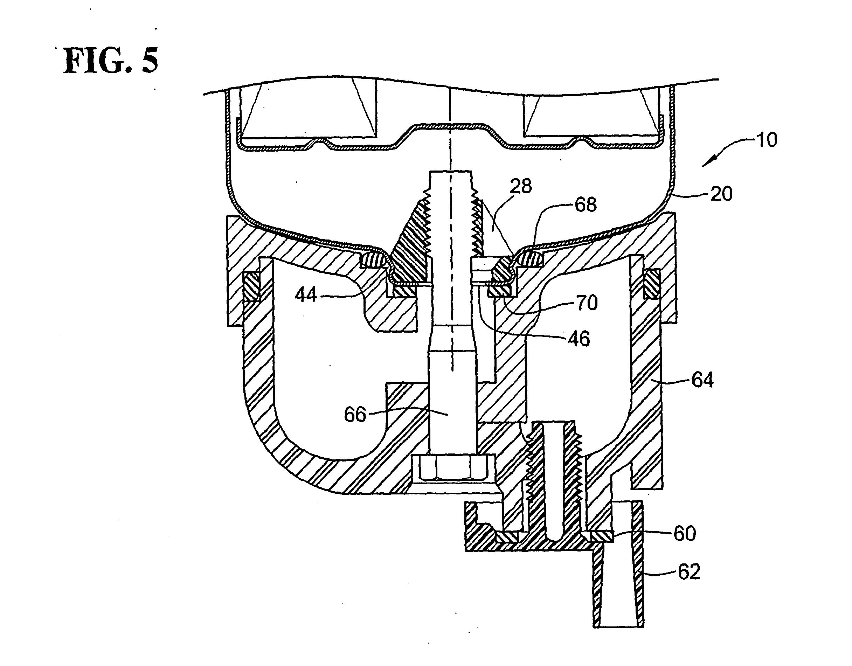

As shown in FIG. 5, the exemplary embodiment of the filter cartridge 10 is further configured in such a manner that a sealing element in the form of a drain bowl 64 may be operatively attached to the drain fitting 28 by a through-bolt 66. The drain bowl 64, shown in FIG. 5, includes a drain cock 62 and a resilient seal member 60 for draining fluid from the drain bowl 64. The configuration of the exemplary embodiment of the filter cartridge 10 allows for seals between the drain bowl 64 and housing 20 of the filter cartridge 10 to be placed around the cup-shaped extension 44, as indicated by O-ring seal 68, or alternatively by a face seal 70 bearing against the end wall 46 of the cup-shaped portion 42 of the housing 20.

It will be appreciated, by those having skill in the art, that, by virtue of the various features and elements of the exemplary embodiment described above, the crimped connection 30 allows far greater flexibility, and openness of manufacturing tolerances, than could be tolerated by prior filter cartridges in which a drain fitting was press-fitted into a housing. In a filter cartridge, according to the invention, the periphery of the drain fitting need not fit tightly into the housing in making the crimped joint. Furthermore, with the anti-rotation features, and a substantially radially outwardly opening crimping groove, as described above in relation to the exemplary embodiment, a filter cartridge, according to the invention, provides far greater resistance to having the drain fitting pushed back into the interior of the housing, or rotating with respect to the housing, than can be achieved by prior filter cartridges in which a drain fitting is merely press-fitted into the housing.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A filter cartridge (10) apparatus, comprising:
a filter pack (18); and
a housing (20) disposed about the filter pack (18), having an upper end (22) and a lower end (24) thereof, and defining a sump (26) extending substantially below the filter pack (1 8) at the lower end (24) of the housing (20);
the housing (20) further comprising a drain fitting (28) passing through the housing (20) in the sump (26) and attached to the housing (20), with the drain fitting (28) defining an axis of passage (32) through the housing (20);
the drain fitting (28) having an outer periphery thereof including a crimping recess (34) therein, in the form of a radially outwardly opening groove;
the housing (20) having a crimped portion (38) thereof formed into the crimping recess (34), to thereby form a crimped connection (30) between the drain fitting (28) and the housing (20);
said filter cartridge being **characterized in that**
the crimping recess (34) includes at least one anti-rotation feature, in the form of a raised rib (36) extending outwardly from and substantially axially across the crimping recess (34);
the crimped portion (38) of the housing (20) being formed about the raised rib (36) for resisting rotation of the drain fitting (28) with respect to the housing (20).

2. The filter cartridge (10) according to claim 1, wherein the housing (20) comprises a tubular wall (44) section thereof, disposed about the outer periphery of the drain fitting (28) and including the crimped portion (38) of the housing (20).

3. The filter cartridge (10) according to claim 2, wherein the housing (20) further comprises a cup-shaped extension (42) including the tubular wall (44) section, and having an axially facing end wall (46) thereof joined to the tubular wall (44), the end wall (46) having a hole (48) therein providing fluid communication with the drain fitting (28).

4. The filter cartridge (10) according to claim 3, wherein
the drain fitting (28) is configured for operative attachment thereto of a drain cock (62), and
the end wall (46) of the cup-shaped extension (42) defines a sealing surface thereof, adapted for cooperatively forming a sealable juncture with the drain cock (62), to thereby selectively open or close-off fluid communication through the drain fitting (28).

5. The filter cartridge (10) apparatus according to claim 1, wherein
the housing (20) further comprises a cup-shaped extension (42) including a tubular wall (44) and an axially facing end wall (46) thereof joined to the tubular wall (44),
the tubular wall (44) section being disposed about the outer periphery of the drain fitting (28) and including the crimped portion (38) of the housing (20), and
the end wall (46) of the cup-shaped extension (42) having a hole (48) therein providing fluid communication with the drain fitting (28).

6. The filter cartridge (10) apparatus according to claim 5, further comprising:
a sealing element (62) for selectively opening or closing-off fluid communication through the drain fitting (28),
with the drain fitting (28) being configured for operative attachment thereto of sealing element (60), and
the end wall (46) of the cup-shaped extension (42) defining a sealing surface thereof, adapted for cooperatively forming a sealable juncture with the sealing element (62).

7. A method for constructing a fluid filter cartridge (10), having a filter pack (18) disposed within a filter housing (20) having a drain fitting (28), the method comprising
attaching the drain fitting (28) to the housing (20) with a crimped joint (30), the drain fitting (28) having an outer periphery thereof including a crimping recess (34) therein, and
providing at least one anti-rotation feature in the form of a raised rib (36) extending outwardly from and substantially axially across the crimping recess (34) on the drain fitting (28) for engagement by the housing (20) as part of the crimped joint (30), to thereby resisting rotation of the drain fitting (28) with respect to the housing (20).

8. The method according to claim 7, further comprising, installing the filter pack (18) into the filter housing (20).

9. The method according to claim 7, further comprising:
configuring the housing (20) to include a crimpable portion (38) thereof for passage therethrough of the drain fitting (28), and
loosely inserting the drain fitting (28) into the crimpable portion (38) before forming the crimped joint (30).

10. The method according to claim 9, further comprising:
configuring an outer peripheral surface of the drain fitting (28) to include a crimping groove (34), and
forming the crimpable portion (38) of the housing (20) into the crimping groove (34) of the drain fitting (28) to thereby form a crimped joint (30) between the housing (20) and drain fitting (28).

11. The method according to claim filter cartridge (10) according to claim 10, further comprising,
configuring the housing (20) to include a tubular wall (44) section thereof, disposed about the periphery of the drain fitting (28) and including the crimpable portion (38) of the housing (20).

12. The method according to claim 11, further comprising, configuring the housing (20) to provide a cup-shaped extension (42) thereof, with the cup-shaped extension (42) including the tubular wall (44) section, and having an axially facing end wall (46) of the cup-shaped extension (42) joined to the tubular wall (44), the end wall (46) having a hole (48) therein for providing fluid communication with the drain fitting (28).

13. The method according to claim 12, further comprising, configuring the end wall (46) of the cup-shaped extension (42) to define a sealing surface thereof for cooperatively forming a sealable juncture with a sealing element (62), to thereby selectively open or close-off fluid communication through the drain fitting (28).

## Patentansprüche

1. Filterpatronenvorrichtung (10), die Folgendes umfasst:
ein Filterpaket (18); und
ein Gehäuse (20), das um das Filterpaket (18) angeordnet ist und ein oberes Ende (22) sowie ein unteres Ende (24) besitzt und einen Schacht (26) definiert, der sich im Wesentlichen unterhalb des Filterpakets (18) am unteren Ende (24) des Gehäuses (20) erstreckt;
wobei das Gehäuse (20) ferner eine Entleerungsarmatur (28) aufweist, die durch das Gehäuse (20) in dem Schacht (26) verläuft und an dem Gehäuse (20) befestigt ist, wobei die Entleerungsarmatur (28) eine Durchlassachse (32) durch das Gehäuse (20) definiert;
wobei die Entleerungsarmatur (28) einen äußeren Umfang besitzt, der eine Falzaussparung (34) in Form einer radial nach außen öffnenden Nut enthält;
wobei das Gehäuse (20) einen gefalzten Abschnitt (38) besitzt, der in die Falzaussparung (34) geformt ist, um dadurch eine Falzverbindung (30) zwischen der Entleerungsarmatur (28) und dem Gehäuse (20) zu bilden;
wobei die Filterpatrone **dadurch gekennzeichnet ist, dass**
die Falzaussparung (34) wenigstens ein Drehverhinderungsmerkmal in Form eines erhöhten Stegs (36) enthält, der sich von der Falzaussparung (34) nach außen und im Wesentlichen axial über diese erstreckt;
wobei der gefalzte Abschnitt (38) des Gehäuses (20) um den erhöhten Steg (36) ausgebildet ist, um einer Drehung der Entleerungsarmatur (28) in Bezug auf das Gehäuse (20) zu widerstehen.

2. Filterpatrone (10) nach Anspruch 1, wobei das Gehäuse (20) einen rohrförmigen Wandabschnitt (44) aufweist, der um den äußeren Umfang der Entleerungsarmatur (28) angeordnet ist und den gefalzten Abschnitt (38) des Gehäuses (20) enthält.

3. Filterpatrone (10) nach Anspruch 2, wobei das Gehäuse (20) ferner eine becherförmige Verlängerung (42) aufweist, die den rohrförmigen Wandabschnitt (44) enthält und eine axial orientierte Stirnwand (46) besitzt, die mit der rohrförmigen Wand (44) verbunden ist, wobei die Stirnwand (46) ein Loch (48) besitzt, das eine Fluidkommunikation mit der Entleerungsarmatur (28) bereitstellt.

4. Filterpatrone (10) nach Anspruch 3, wobei
die Entleerungsarmatur (28) konfiguriert ist, daran einen Entleerungshahn (62) betriebstechnisch zu befestigen, und
die Stirnwand (46) der becherförmigen Verlängerung (42) eine Abdichtoberfläche hiervon definiert, die dafür ausgelegt ist, zusammenwirkend eine abdichtbare Verbindung mit dem Entleerungshahn (62) zu bilden, um dadurch die Fluidkommunikation durch die Entleerungsarmatur (28) wahlweise zu öffnen oder zu schließen.

5. Filterpatronenvorrichtung (10) nach Anspruch 1, wobei
das Gehäuse (20) ferner eine becherförmige Verlängerung (42) umfasst, die eine rohrförmige Wand (44) und eine axial orientierte Stirnwand (46), die mit der rohrförmigen Wand (44) verbunden ist, enthält,
der rohrförmige Wandabschnitt (44) um den äußeren Umfang der Entleerungsarmatur (28) angeordnet ist und den gefalzten Abschnitt (38) des Gehäuses (20) aufweist und
die Stirnwand (46) der becherförmigen Verlängerung (42) ein Loch (48) besitzt, das eine Fluidkommunikation mit der Entleerungsarmatur (28) bereitstellt.

6. Filterpatronenvorrichtung (10) nach Anspruch 5, die ferner Folgendes umfasst:
ein Abdichtelement (62) zum wahlweisen Öffnen oder Schließen der Fluidkommunikation durch die Entleerungsarmatur (28),
wobei die Entleerungsarmatur (28) konfiguriert ist, das Abdichtelement (60) betriebstechnisch daran zu befestigen, und
die Stirnwand (46) der becherförmigen Verlängerung (42) eine Abdichtoberfläche hiervon definiert, die dafür ausgelegt ist, zusammenwirkend eine abdichtbare Verbindung mit dem Abdichtelement (62) zu bilden.

7. Verfahren zum Konstruieren einer Fluidfilterpatrone (10), die ein Filterpaket (18) umfasst, das in einem Filtergehäuse (20) angeordnet ist, das eine Entleerungsarmatur (28) besitzt, wobei das Verfahren Folgendes umfasst:
Befestigen der Entleerungsarmatur (28) an dem Gehäuse (20) mit einer gefalzten Verbindung (30), wobei die Entleerungsarmatur (28) einen äußeren Umfang besitzt, der eine Falzaussparung (34) besitzt, und
Bereitstellen wenigstens eines Drehverhinderungsmerkmals in Form eines erhöhten Stegs (36), der sich von der Falzaussparung (34) an der Entleerungsarmatur (28) nach außen und im Wesentlichen axial über diese erstreckt, um mit dem Gehäuse (20) als Teil der gefalzten Verbindung (30) in Eingriff zu gelangen, um dadurch der Drehung der Entleerungsarmatur (28) in Bezug auf das Gehäuse (20) zu widerstehen.

8. Verfahren nach Anspruch 7, das ferner das Installieren des Filterpakets (18) in dem Filtergehäuse (20) umfasst.

9. Verfahren nach Anspruch 7, das ferner Folgendes umfasst:
Konfigurieren des Gehäuses (20), damit es einen falzbaren Abschnitt (38), durch den die Entleerungsarmatur (28) bewegt werden kann, aufweist, und
loses Einsetzen der Entleerungsarmatur (28) in den falzbaren Abschnitt (38), bevor die gefalzte Verbindung (30) gebildet wird.

10. Verfahren nach Anspruch 9, das ferner Folgendes umfasst:
Konfigurieren einer äußeren Umfangsoberfläche der Entleerungsarmatur (28), damit sie eine Falznut (34) aufweist, und
Bilden des falzbaren Abschnitts (38) des Gehäuses (20) in der Falznut (34) der Entleerungsarmatur (28), um dadurch zwischen dem Gehäuse (20) und der Entleerungsarmatur (28) eine gefalzte Verbindung (30) zu bilden.

11. Verfahren nach Anspruch 10, das ferner Folgendes umfasst:
Konfigurieren des Gehäuses (20), damit es einen rohrförmigen Wandabschnitt (44) aufweist, der um den Umfang der Entleerungsarmatur (28) angeordnet ist und den falzbaren Abschnitt (38) des Gehäuses (20) enthält.

12. Verfahren nach Anspruch 11, das ferner das Konfigurieren des Gehäuses (20), um eine becherförmige Verlängerung (42) hiervon zu schaffen, umfasst, wobei die becherförmige Verlängerung (42) den rohrförmigen Wandabschnitt (44) aufweist und eine axial orientierte Stirnwand (46) der becherförmigen Verlängerung (42) besitzt, die mit der rohrförmigen Wand (44) verbunden ist, wobei die Stirnwand (46) ein Loch (48) besitzt, um eine Fluidkommunikation mit der Entleerungsarmatur (28) bereitzustellen.

13. Verfahren nach Anspruch 12, das ferner das Konfigurieren der Stirnwand (46) der becherförmigen Verlängerung (42) umfasst, um eine Abdichtoberfläche zu definieren, um zusammenwirkend eine abdichtbare Verbindung mit einem Abdichtelement (62) zu bilden, um dadurch eine Fluidkommunikation durch die Entleerungsarmatur (28) wahlweise zu öffnen oder zu schließen.

## Revendications

1. Appareil à cartouche de filtre (10), comprenant :
un pack de filtre (18) ; et
un boîtier (20) disposé autour du pack de filtre (18), présentant une extrémité supérieure (22) et une extrémité inférieure (24) de boîtier, et définissant une cuve (26) qui s'étend sensiblement sous le pack de filtre (18) à l'extrémité inférieure (24) du boîtier (20) ;
le boîtier (20) comprenant en outre un raccord de purge (28) qui passe à travers le boîtier (20) et débouche dans la cuve (26) et qui est fixé au boîtier (20), le raccord de purge (28) définissant un axe de passage (32) à travers le boîtier (20) ;
le raccord de purge (28) présentant une périphérie extérieure de raccord comprenant un renfoncement de sertissage (34), ledit renfoncement étant sous la forme d'une gorge s'étendant radialement et ouverte vers l'extérieur ;
le boîtier (20) présentant une partie sertie (38) de boîtier qui est formée dans le renfoncement de sertissage (34), de manière à constituer de la sorte un raccord serti (30) entre le raccord de purge (28) et le boîtier (20) ;
ladite cartouche de filtre étant **caractérisée en ce que** :
le renfoncement de sertissage (34) comprend au moins une caractéristique de blocage anti-rotation, sous la forme d'une nervure saillante (36) s'étendant vers l'extérieur et de façon sensiblement axiale à partir du renfoncement de sertissage (34), et en travers de celui-ci ;
la partie sertie (38) du boîtier (20) étant formée autour de la nervure saillante (36) de manière à bloquer la rotation du raccord de purge (28) par rapport au boîtier (20).

2. Cartouche de filtre (10) selon la revendication 1, dont le boîtier (20) comprend une section de paroi tubulaire (44) de boîtier, disposée autour de la périphérie extérieure du raccord de purge (28) et comprenant la partie sertie (38) du boîtier (20).

3. Cartouche de filtre (10) selon la revendication 2, dont le boîtier (20) comprend en outre un prolongement en forme de coupelle (42) comprenant la section de paroi tubulaire (44), et présentant une paroi d'extrémité faisant face dans le sens axial (46) reliée à la paroi tubulaire (44), la paroi d'extrémité (46) ayant un orifice (48) ménagé en elle pour assurer la communication fluidique avec le raccord de purge (28).

4. Cartouche de filtre (10) selon la revendication 3, dont le raccord de purge (28) est configuré de manière à permettre le raccordement d'un robinet de purge (62) à celui-ci lors de l'utilisation, et
dont la paroi d'extrémité (46) du prolongement en forme de coupelle (42) définit une surface d'étanchéité, ladite surface d'étanchéité étant adaptée à former une liaison étanche avec le robinet de purge (62), pour permettre d'ouvrir ou de fermer sélectivement la communication fluidique par l'intermédiaire du raccord de purge (28).

5. Appareil à cartouche de filtre (10) selon la revendication 1, dont le boîtier (20) comprend en outre un prolongement en forme de coupelle (42) comprenant une paroi tubulaire (44) et une paroi d'extrémité faisant face dans le sens axial (46) reliée à la paroi tubulaire (44),
la section de paroi tubulaire (44) étant disposée autour de la périphérie extérieure du raccord de purge (28) et comprenant la partie sertie (38) du boîtier (20), et
la paroi d'extrémité (46) du prolongement en forme de coupelle (42) ayant un orifice (48) ménagé en elle pour permettre la communication fluidique avec le raccord de purge (28).

6. Appareil à cartouche de filtre (10) selon la revendication 5, comprenant en outre :
un élément de fermeture étanche (62), pour ouvrir ou fermer sélectivement la communication fluidique par l'intermédiaire du le raccord de purge (28),
le raccord de purge (28) étant configuré de manière à permettre lors de l'utilisation la liaison à celui-ci de l'élément de fermeture étanche (60), et
la paroi d'extrémité (46) du prolongement en forme de coupelle (42) définissant une surface d'étanchéité de celui-ci, ladite surface d'étanchéité étant adaptée à former, par coopération avec l'élément de fermeture (62), une liaison étanche entre les deux.

7. Procédé de construction d'une cartouche de filtre à fluide (10), comprenant un pack de filtre (18) disposé dans un boîtier de filtre (20) comprenant un raccord de purge (28), le procédé comprenant :
la fixation du raccord de purge (28) au boîtier (20) par un raccord serti (30), le raccord de purge (28) présentant une périphérie extérieure de raccord comprenant un renfoncement de sertissage (34), et
le montage d'au moins une caractéristique de blocage anti-rotation sous la forme d'une nervure saillante (36) s'étendant vers l'extérieur et de façon sensiblement axiale, à partir du renfoncement de sertissage (34) et en travers de celui-ci, sur le raccord de purge (28) pour la mise en contact avec le boîtier (20) en tant que partie du raccord serti (30), pour bloquer de la sorte la rotation du raccord de purge (28) par rapport au boîtier (20).

8. Procédé selon la revendication 7, comprenant en outre l'installation du pack de filtre (18) dans le boîtier de filtre (20).

9. Procédé selon la revendication 7, comprenant en outre :
la configuration du boîtier (20) de manière à ce que celui-ci comprenne une partie pouvant être sertie (38) pour assurer le passage du raccord de purge (28) à travers le boîtier et
l'insertion lâche du raccord de purge (28) dans la partie pouvant être sertie (38), antérieurement à la formation du raccord serti (30).

10. Procédé selon la revendication 9, comprenant en outre :
la configuration d'une surface extérieure périphérique du raccord de purge (28) de manière à inclure une gorge de sertissage (34), et
la formation de la partie sertie (38) du boîtier (20) dans la gorge de sertissage (34) du raccord de purge (28) pour former de la sorte un raccord serti (30) entre le boîtier (20) et le raccord de purge (28).

11. Procédé selon la revendication 10, comprenant en outre :
la configuration du boîtier (20) de manière à inclure dans celui-ci une section de paroi tubulaire (44) disposée autour de la périphérie du raccord de purge (28) et comprenant la partie pouvant être sertie (38) du boîtier (20).

12. Procédé selon la revendication 11, comprenant en outre :
la configuration du boîtier (20) de manière à monter le prolongement en forme de coupelle (42) de celui-ci, avec le prolongement en forme de coupelle (42) comprenant la section de paroi tubulaire (44), et présentant une paroi d'extrémité faisant face dans le sens axial (46) du prolongement en forme de coupelle (42) reliée à la paroi tubulaire (44), la paroi d'extrémité (46) ayant un orifice (48) ménagé en elle pour assurer la communication fluidique avec le raccord de purge (28).

13. Procédé selon la revendication 12, comprenant en outre :
la configuration de la paroi d'extrémité (46) du prolongement en forme de coupelle (42) de manière à définir une surface d'étanchéité de celui-ci pour former, en coopérant avec un élément de fermeture (62), une liaison étanche pour permettre, de la sorte, d'ouvrir ou de fermer sélectivement la communication fluidique par l'intermédiaire du le raccord de purge (28).
